# EUROPEAN PATENT APPLICATION

(11) **EP 0 566 282 A2**
(43) Date of publication of application: **20.10.1993**
(21) Application number: 93302573.6
(22) Date of filing: 01.04.1993
(51) Int. Cl.: G06F 12/08

(54) **Method for accessing memory resident real-time data**

(30) Priority: 14.04.1992 US 868383
(71) Applicant: HONEYWELL INC., Minneapolis Minnesota 55408 (US)
(72) Inventor: Kish, Karl S., Glendale, Arizona 85310 (US); Heim, Thomas W., Tempe, Arizona 84282 (US)
(74) Representative: Fox-Male, Nicholas Vincent Humbert

(57) **Abstract**

Interface apparatus is connected to a first network of a first system and is connected to a second network of a second system such that each subsystem of the second system can communicate with each subsystem of the first system. The interface apparatus searches the data cache to determine if the data requested is currently stored in the data cache and is timely, and transfers it if it is. If not, it requests the information from the first system, stores it in the data cache, updates a plurality of pointer tables, each pointer table being associated with a corresponding memory access arrangement. The data is then transmitted to the requesting subsystem of the second system in accordance with a predetermined protocol thereby resulting in faster communication between the first and second system.

## Description

### RELATED APPLICATION

The present patent application is related to U.S. Patent Application 07/868,382, entitled "INTERFACE FOR PROVIDING MULTIPLE COMPUTER SYSTEMS ACCESS TO A PROCESS CONTROL SYSTEM," by T. Heim and K. Kish and filed on 14 April 1992 and assigned to Honeywell Inc., the assignee of the present invention.

### BACKGROUND OF THE INVENTION

The present invention relates to storage management, and more particularly, to a method for high-speed access to memory resident data.

In the present systems, data storage is organized such that the actual data is copied or stored separately for each access method utilized by the system.

The present invention provides a data access system which allows for the actual data to be organized for access via multiple doubly linked lists or by utilizing a hashing algorithm for direct access. In the present invention, the actual data is shared in a common layer of the data record and is not copied or stored separately for each access method. Thus, the same data element can be accessed via several sequential paths or by direct access (through a hash table). Memory utilization is thereby minimized, data integrity insured, and high-speed direct memory access can be achieved.

### SUMMARY OF THE INVENTION

Therefore, there is provided by the method of the present invention, a method of memory access which includes both sequential paths access and direct access, each memory access method sharing of the same data element. A total system includes a first and second system. The first system includes a first plurality of subsystems each connected to a first network. The second system includes a second plurality of subsystems each connected to a second network. Each of the first plurality of subsystems communicates with each of the other subsystems of the first system via a first predetermined protocol of the first network. Each of the second plurality of subsystems communicates with each of the other subsystem of the second system via a second predetermined protocol of the second network.

An interface apparatus, having a data cache for storing data which had previously been requested by one of the subsystems of the second system from the first system, the data being time-stamped, is operatively connected to the first network and the second network such that each subsystem of the second system can communicate with each subsystem of the first system. The interface apparatus implements a method for speeding up communications between the first and second system. The method comprises the steps of searching the data cache to determine if the data requested is currently stored in the data cache. If the data requested is found, determine if the data is timely, otherwise proceed to the transfer step. If the data found is timely, proceed to the transfer step, otherwise, initiate communications with the first system to obtain the data requested. Upon receipt of the data requested from the first system, store the data in the data cache. Then update a plurality of pointer tables, each pointer table being associated with a corresponding memory access arrangement, including a sequential memory access arrangement and a direct memory access arrangement, with data cache address information indicating where the data resides within the data cache. The data is then transmitted to the requesting subsystem of the second system in accordance with the second predetermined protocol thereby resulting in a speedy communication system between the first and second system.

Accordingly, it is an object of the present invention to provide a method which combines a sequential and direct data access technique and actually sharing of a common data element (i.e., the actual data).

This and other objects of the present invention will become more apparent when taken in conjunction with the following description and attached drawings, wherein like characters indicate like parts, and which drawings form a part of the present application.

### BRIEF DESCRIPTION OF THE DRAWINGS

Figure 1 shows a system block diagram of a process control system interconnected to a computer system by an interface apparatus in which the access method of the present invention can be utilized;
Figure 2 shows a block diagram of the interface apparatus which implements the access method of the present invention;
Figure 3 shows a structure of header information for performing the sequential search of the preferred embodiment of the present invention;
Figure 4 shows a functional structure of the hashing process of the preferred embodiment of the present invention which points to the address of the data record; and
Figure 5 shows a flow diagram of the request process utilized in the preferred embodiment of the present invention.

### DETAILED DESCRIPTION

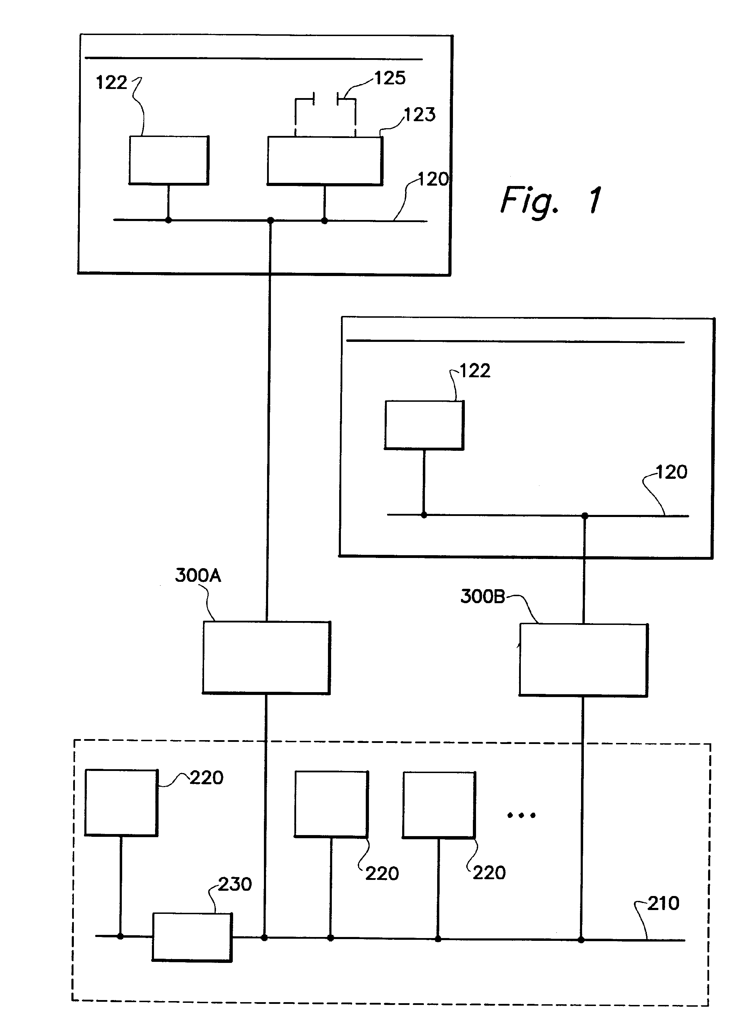

Before describing the access method of the present invention, it will be helpful in understanding the environment in which the access method can be utilized. Referring to Figure 1, there is shown a system block diagram of the process control system 10 and a computer system 200 interconnected by an interface apparatus 300. A computer system of the preferred embodiment includes a plurality of VAX computers connected to a network (NETWORK) 210. VAX 2, VAX 3, ...220 are each operatively connected to the NETWORK 210. VAX 1 220 (which may be remotely located from the other VAX machines or computers) is also operatively connected to the NETWORK 210 via a link 230. Each VAX 220 communicates to the other VAXes on the NETWORK 210 by a predetermined protocol. (VAX is a family or class of computers of the Digital Equipment Corporation, Maynard, Massachusetts, and additional information regarding VAX computers and NETWORK, DECnet, can be obtained by manuals provided by the Digital Equipment Corporation.) It will be recognized by those skilled in the art that although a VAX computer system is utilized in the description and in the preferred embodiment, any computer system can be utilized, as described herein, and any process control system can likewise be used.

The process control system 10 includes a plurality of physical modules, which include a universal operator station (US) 122, an application module (AM) (not shown), a history module (HM) (not shown), a computer module (CM) (not shown), and duplicates of these modules (and additional types of modules, module X, 123) as necessary to perform the required control/supervisory function of the process being controlled. Each of these physical modules includes a microprocessor and is operatively connected to a local control network (LCN) 120 which permits each of these modules to communicate with each other as necessary in accordance with a predetermined protocol. A more complete description of the plant control system 10, and the physical modules can be had by reference to U.S. Patent No. 4,607,256, or by reference to the above-identified related application.

The computer system 200 can obtain data from the various modules of the process control system 10 via the interface 300. The interface A 300A is operatively connected to the LCN 120 of the process control system A 10Aand the NETWORK 210 of the computer system 200. Likewise, the interface B 300B is operatively connected to the LCN 120 of the process control system B 10B and to the NETWORK 210 of the computer system 200. The interface 300 is communicated to by the VAXes 220 of the computer system 200 in accordance with the predetermined NETWORK protocols as though the interface 300 is another VAX. Similarly, the interface 300 communicates to the modules connected to the LCN 120 of the process control system 10 like any other module connected to the LCN in accordance with the predetermined LCN protocol. Thus, if the current status or configuration of a valve 125 in the process control system A 10A is desired by VAX 2 220, VAX 2 220 communicates to interface A 300A utilizing the address of interface A and requesting the desired information in accordance with the predetermined NETWORK protocol. I nterface A 300A commu n icates with h module X 123 (module X having the configura- tion/status of valve 125) like any other module connected to LCN 120 in accordance with the predetermined LCN protocol. Module X responds to interface A 300A like it responds to any other module connected to the LCN 120, supplying the requested data. The data exchange is made within interface A 300A and communicated to the requesting VAX i.e., VAX 2 220, in accordance with the predetermined NETWORK protocol, thereby providing the access to the process control system 10 by the computer system. Interface B 300B is utilized to connect the computer system 200 to the process control system B 10B. All of the VAX computers 220 connected to the NETWORK 210 of the computer system 200 have access to the process control system through the single interface apparatus 300.

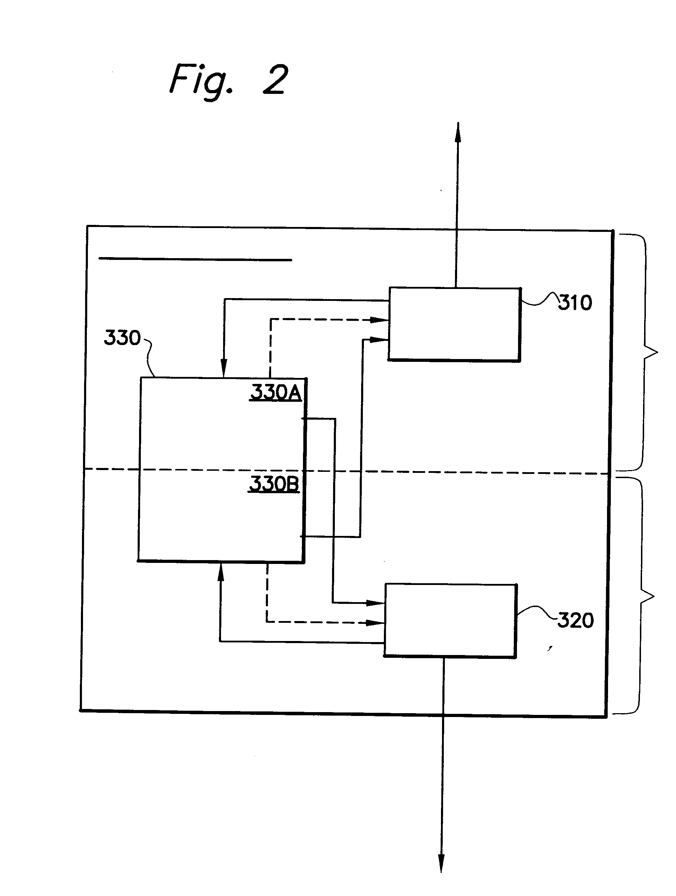

Referring to Figure 2, there is shown a block diagram of the interface apparatus 300. The interface apparatus 300 essentially consists of 2 portions, i.e., a VAX portion and an LCN portion. The LCN portion includes a microprocessor 310 (up) which is operatively connected to the LCN 120 of the process control system 10. In the preferred embodiment of the interface apparatus 300, the microprocessor 310 is a Motorola 68000 micro processor. (It will be recognized by those skilled in the art that any microprocessor can be utilized. It simplifies the implementation to utilize a up that is of the same type or compatible with the up of the modules; thus, the Motorola up is used in the preferred embodiment since it is the up of the modules.) The microprocessor 310 interfaces to the LCN 120 in accordance with the predetermined LCN protocol. The VAX portion includes a VAX processor 320 which is operatively connected to the VAX NETWORK 210. The VAX communicates to the VAX NETWORK 210 in accordance with the predetermined VAX protocol. In the preferred embodiment the VAX processor 320 is an RT300 DEC processor (a Digital Equipment Corp. processor which is a VAX processor, for the reasons stated above). The interface 300 includes a memory 330 which is operatively connected to both the microprocessor 310 and the VAX processor 320 in a predefined manner. Specifically, the memory 330 consists of two portions, memory A 330A and memory B 330B. Memory A 330A is written into by microprocessor 310 and is read by VAX processor 320. Conversely, memory B 330B can be written into by the VAX processor 320 and is read by the microprocessor 310. In this manner, messages received by the VAX processor 320 from the VAX NETWORK 210 is written into memory B 330B. When the microprocessor 310 examines the memory B and determines a message or request is required of the process control system, the requested data from the process control system 10 upon receipt by the microprocessor 310 is written into memory A. The VAX processor 320 examines memory A and upon detecting a new message fetches the data and then transfers that data to the requesting VAX thereby permitting the VAX to access the process control system 10. In addition, VAX processor 320 can also read memory B 330B and microprocessor 310 can also read memory A 330A.

In order to respond timely to requests for data, a high- speed access method to memory resident data is required. The high speed access method of the present invention will now be described.

Part of the processing performed by the VAX Processor 320 includes a data caching function, i.e., searching a dedicated portion of memory to determine if the requested data is already stored in memory, and if so, determining if the requested data is current from a time stamp associated with the data. (The criteria for determining if the data is current will vary from user to user and application to application. Dedicated memory as used here is any predefined area of memory B 330B in which user data can be allocated.) If the requested data is available from memory and current, the requested data is transmitted to the requesting VAX in accordance with the established protocol. This check is relatively fast and can eliminate making a request to a relatively slow LCN. If the data is not available or is not current the request is then made to the LCN as described herein.

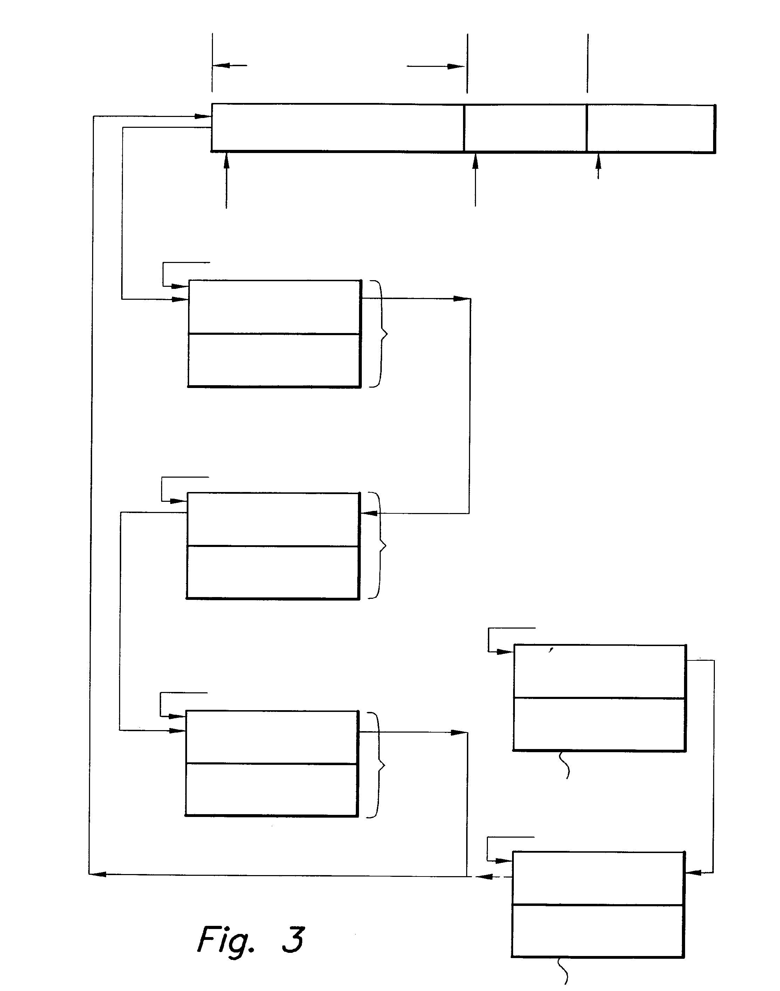

The method of searching the dedicated portion of memory of the present invention combines a sequential search technique and a direct access technique, the actual data only being stored once in memory thereby optimizing the use of memory. Referring to Figure 3 there is shown the data cache structure of data for performing the sequential search of the preferred embodiment of the present invention. In the preferred embodiment three (3) data types are defined, specifically, D1 (real numbers), D2 (integer numbers), and D3 (ASCII data). Initially the header information is stored in some predefined memory locations available to the process performing the data search i.e., the VAX processor 320. For example purposes only, assume that the 3 data type header information is initially stored in locations 100, 101, and 102, for data types D1, D2, and D3, respectively. The description will proceed describing the D1 (or real numbers) data type but is equally applicable to the other data types. When a sequential search of dedicated memory (i.e., the data cache) is to be made, a call to a search routine within the VAX processor 320 includes,... the name of the data, data type, and additional information which is utilized by the processor responding to the call (or request). Since the data type in this example is specified as D1, only the D1 header will be searched. Location 100, which is known to the processor and is a predetermined location, is accessed and a forward link location in the header contains the address of the first data record, data record 1. The header information contains both a forward link and a backward link. The data record also contains a forward link and a backward link and the data associated with the data record. The data includes the data name, data type, time stamp, and other information including the value of the data. The data record is fixed in size and can reside anywhere within the dedicated memory space which is assigned at the time it is written. In the preferred embodiment the data record is a fixed size of 128 bytes. At location 1000, pointed to by the forward link of the D1 header and is 1000 for example purposes only all of the address locations here are for example purposes only, the data record is examined and the data name compared to determine if this data record corresponds to the requested data. If not, the forward link indicates that the next D1 data type record, data record 2, is located at location 3000. Starting at location 3000 data record 2 is obtained and the data once again examined to determine if the data name corresponds to the data contained in the request. If the data name does not compare to the request, the next data record, data record 3, is obtained from location 4000. The location 4000 is obtained as the contents of the forward link in data record 2. Data record 3 is then obtained starting at location 4000. The data name is then compared to the requesting message to determine if data record 3 corresponds to the requested data. If there is no compare then the next record is obtained. In this particular instance the forward link points to location 100 which is the forward link address of the initiating D1 header. At this point the process determines that the data is not contained within the data cache area. When new information is obtained from the process control system, it is passed along to the requesting computer of the computer system 200. In addition, the information is also stored in the data cache in order to process subsequent data requests more quickly.

Still referring to Figure 3, assume for example purposes only that a new data record to be written of the D1 data type is data record 4. The data is written in an available memory location of 128 bytes in size which is allocated by the operating system (or by hardware as is done in the preferred embodiment of the present invention). In this example location 5000 is the starting location for data record 4. The data record 4 is then stored in the data cache starting at memory location 5000, the forward link of data record 4 is assigned location 100 which completes the circular link back to the D1 header, and the forward link of data record 3 must be modified (or maintained) by changing the forward link from location 100 to location 5000. Thus the circular link is completed.

Although not specifically shown, the backward link of data record 4 has the contents of 4000 thereby pointing to data record 3, data record 3 backward link points to location 3000, the backward link for data record 2 contains 1000 thereby pointing to the location 1000 of data record 1.... In this fashion the data can be searched in either a forward or backward direction thereby providing the doubly linked list.

The direct access of memory is achieved by a hashing technique, including a hash table which provides pointers into the data records described in conjunction with Figure 3.

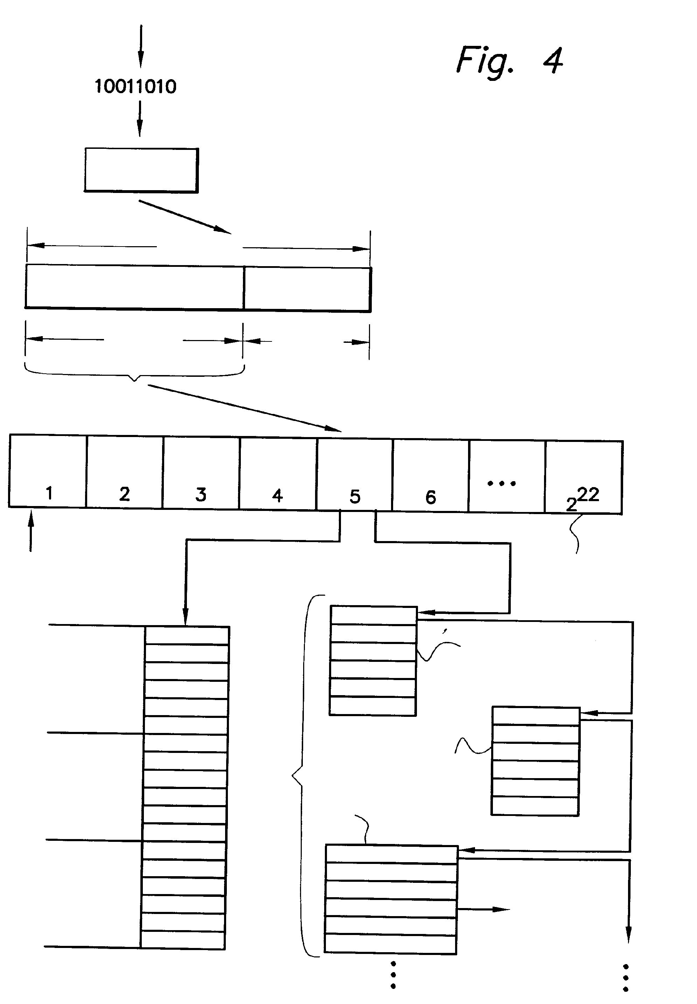

Referring to Figure 4, there is shown a functional structure of the hashing process of the preferred embodiment of the present invention which points to the address of the predetermined data record. When a call is made for a specific data element from a computer of the computer system 200, the call includes the data name. For example purposes only, assume the data requested is the pressure of a known predetermined pressure sensor which indicates the pressure within a specified pipeline, and is designated PRESSURE1. In order to quickly obtain the location of the data record designated as PRESSURE1, the name PRESSURE1 is a series of 1's and 0's, i.e., an ASCII string. This ASCII string is hashed and results in a 32 bit word in the preferred embodiment of the present invention. The 32 bit word is divided into an index of 22 bits and a tag of 10 bits. The 22 bit index is utilized as a pointer into a hashing table. The queue header in the hashing table contains an address which points to a queue associated with the hash table element. The queue is structured to contain the tag information and each element within the queue is searched to compare the tag information with the 10 bit tag information of the hash value. When a compare is found, and a data 1 type was requested, the data 1 pointer points to the location of the data record which was written as discussed above in conjunction with Figure 3. Thus a quick entry into the data is achievable using the hashing technique and the same data record used for the sequential store of information is utilized by the hashing method; thus the data is only written once and shared by both access methods. Thus if the index value was 5, the hash table is immediately entered from the start of the hash table plus 5 which gets to the "Q HEADER 5". The queue header contains therein an address value that points to a queue associated with queue header 5. In the preferred embodiment of the present invention, the queue header contains a forward link and a backward link, as discussed above in conjunction with Figure 3. The queue is then searched to determine a record which contains the value of tag 3, the tag value of 3 being a result of the hashing process and is the 10 bits of the hash output word. When record 3 is reached the tag value 3 is contained therein and for a data type 1 record request the address contained therein is address 3000 which points to data record 2. This immediately points to the data stored in the data cache and can be fetched and transmitted to the requesting computer of the computer system 200 without having to access the process control system. Although the queue is shown as a contiguous queue, the queue can take on different forms including using forward links as shown in the alternative record 1 which points to record 2,... as described above in conjunction with the sequential method of Figure 3. In this example which uses 22 bits for the index, the maximum length of the hash table is 2²²; thus, the last Q Header in the hash table is 2²².

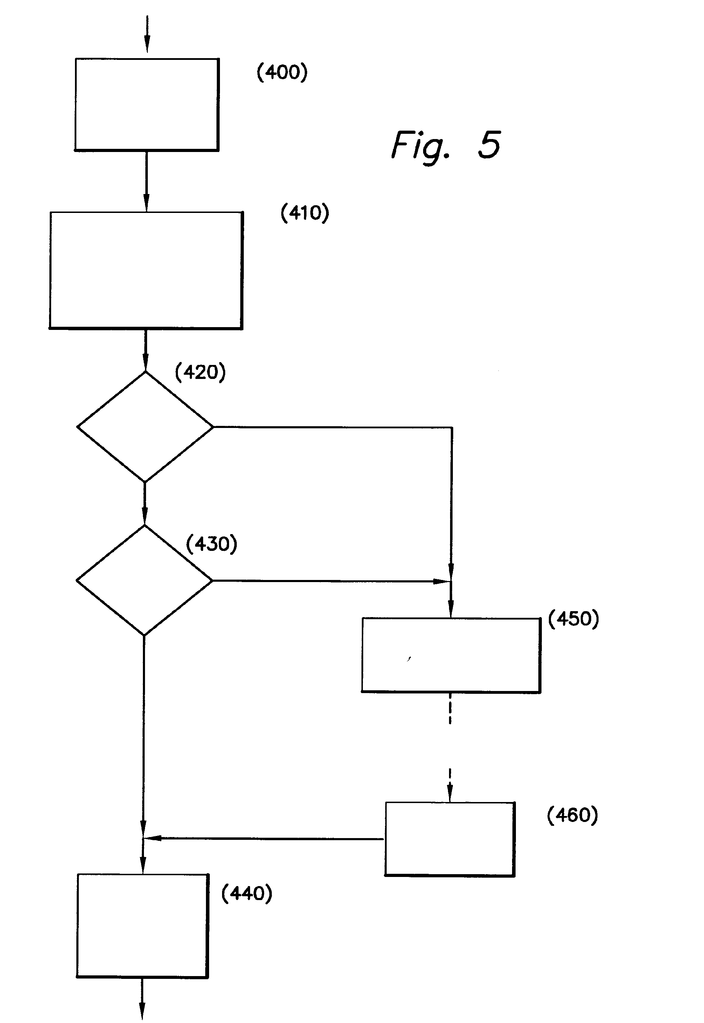

Referring to Figure 5, the process of the VAX processor 320 of the interface 300 is shown. When a request is made from a computer of the computer system 200 (block 400), before proceeding to perform a request via the process control system, which is a relatively slow process, the hash approach (i.e., the direct approach to accessing data stored in the data queue) is performed in order to determine if the data is stored in data cache (memory) (block 410). If the data is stored in memory (block 420), a decision is made as to whether the data is timely (block 430). This is determined from comparing the request to the time stamp in the data record, and knowing the data name and data type whether data stored therein is timely. If the data is timely then the data is obtained and transmitted to the computer system (block 440). If the data is not in memory (the queue header has a zero value, or no compare of the tag information is found) or if the data is not timely, then a request is made to the process control system (block 450). When a reply is received from the process control system, data is stored in the memory data cache area (block 460), and the header information of both the sequential and the queue information of the hash queues table is updated, and the requested data is then transmitted to the computer system (block 440). The hash queue table and the Q Headers associated therewith, and the queue headers of the various data types comprise pointer tables which provide pointer information for obtaining the address location within dedicated memory of the next pointer or the actual data.

The hashing technique utilized in the preferred embodiment of the present invention uses the ASCII string as the hash seed. Then the actual data hashing is accomplished by a series of exclusive -ORs and bit rotations which is commonly well know in the art. As will be recognized by those skilled in the art any hashing technique can be used which produces a repeatable random number. It will be further recognized by those skilled in the art that the size of the hash index and hash tag can be utilized such that increasing the hash index and decreasing the hash tag allows more direct access to the requested data by indexing into the hash table with a shorter queue to be searched for the proper hash tag. However, this modification increases the size of the hash table and results in memory utilization inefficiency. Similarly, the VAXes communicate to the interface via the NETWORK 210 as though it were another VAX connected to the NETWORK. The messages include information identifying the requested data, the sending VAX,... the processing done within the interface 300, which includes the security checks to insure the integrity of the respective systems are maintained, can also include additional processing to time stamp the data, consolidate requests,....

While there has been shown what is considered the preferred embodiment of the present invention, it will be manifest that many changes and modifications can be made therein without departing from the essential spirit and scope of the invention. It is intended, therefore, in the annexed claims to cover all such changes and modifications which fall within the true scope of the invention.

## Claims

1. A total system having a first and second system, wherein the first system includes a first plurality of subsystems each connected to a first network and the second system includes a second plurality of subsystems each connected to a second network, and wherein each of the first plurality of subsystems communicates with each of the other subsystems of the first system via a first predetermined protocol of the first network, and each of the second plurality of subsystems communicates with each of the other subsystems of the second system via a second predetermined protocol of the second network, an interface apparatus, having a data cache for storing data which had previously been requested by one of the subystems of the second system from the first system, the data being time-stamped, operatively connected to the first network and the second network such that each subsystem of the second system can communicate with each subsystem of the first system, the total system characterised by the interface apparatus having means to implement speeding up communications between the first and second systems, the implementing means comprising:
means to search the data cache to determine if the data requested is currently stored in the data cache,
means to determine if any data found is timely,
means to initiate (if the data found is timely) communications with the first system to obtain the data requested,
means to store, upon receipt of the data requested from the first system, the data in the data cache,
means to update a plurality of pointer tables, each pointer table being associated with a corresponding memory access arrangement including a sequential memory access arrangement and a direct memory access arrangement, with data cache address information indicating where the data resides within the data cache and
means to transmit the data to the requesting subsystem of the second system in accordance with the second predetermined protocol.

2. A system according to Claim 1, characterised by:
means to hash a data name of the data requested, yielding a hash output word, the hash output word being a binary string divided into a predefined index and tag portion;
means to access a hash table using the index portion of the hash output word as an index value into the hash table to obtain an address of a first data records associated with the index value;
means to compare the tag portion of the hash output word with a tag value stored in the data record;
means to obtain, if a compare of tags is found, the address value of where the data is located in the data cache to fetch the requested data;
means to search, if no compare of tags is found, the remained of the data records associated with the index value until a compare is found; and
means to exit the data cache search stage with an indication of the search having found the data within the data cache or indication that the requested data is not in the data cache.

3. A system according to Claim 1 or 2 characterised in that the direct memory access arrangement is a hashing technique.

4. Amethod of communicating in a total system having a first and second system, wherein the first system includes a first plurality of subsystems each connected to a first network and the second system includes a second plurality of subsystems each connected to a second network, and wherein each of the first plurality of subsystems communicates with each of the other subsystems of the first system via a first predetermined protocol of the first network, and each of the second plurality of subsystems communicates with each of the other subsystem of the second system via a second predetermined protocol of the second network, an interface apparatus, having a data cache for storing data which had previously been requested by one of the subsystem of the second system from the first system, the data being time-stamped, operatively connected to the first network and the second network such that each subsystem of the second system can communicate with each subsystem of the first system, the method characterised by:
a) searching the data cache to determine if the data requested is currently stored in the data cache;
b) if the data requested is found, determining if the data is timely, otherwise proceeding to step (d);
c) if the data found is timely, proceeding to step (g), otherwise, proceeding to step (d);
d) initiating communications with the first system to obtain the data requested;
e) upon receipt of the data requested from the first system, storing the data in the data cache;
f) updating a plurality of pointer tables, each pointer table being associated with a corresponding memory access arrangement including a sequential memory access arrangement and a direct memory access arrangement, with data cache address information indicating where the data resides within the data cache; and
g) transmitting the data to the requesting subsystem of the second system in accordance with the second predetermined protocol thereby resulting in a speedy communication system between the first and second system.

5. A method according to Claim 4, characterised by the step of searching the data cache comprising the steps of:
a) hashing a data name of the data requested, yielding a hash output word, the hash output word being a binary string divided into a predefined index and tag portion;
b) accessing a hash table using the index portion of the hash output word as an index value into the hash table to obtain an address of a first data record associated with the indexval- ue;
c) comparing the tag portion of the hash output word with a tag value stored in the data record;
d) if a compare of tags is found, obtaining the address value of where the data is located in the data cache to fetch the requested data, and proceed to step (f);
e) if no compare of tags is found, search the remained of the data records associated with the index value until a compare is found, and if no compare is found, the requested data is not stored in memory; and
f) exiting the step of searching the data cache with an indication of the search having found the data within the data cache or the requested data is not in the data cache.

6. A method according to Claim 4 or 5 characterised in that the direct memory access arrangement is a hashing technique.
